# EUROPEAN PATENT SPECIFICATION

(11) **EP 3 263 891 B1**
(45) Date of publication and mention of the grant of the patent: **24.04.2019**
(21) Application number: 16382314.9
(22) Date of filing: 01.07.2016
(51) Int. Cl.: F03D 13/10, F03D 1/00

(54) **METHOD FOR MOUNTING A WIND TURBINE ON A TOWER**
VERFAHREN ZUR MONTAGE EINER WINDTURBINE AUF EINEM TURM
PROCÉDÉ DE MONTAGE D'UNE ÉOLIENNE SUR UNE TOUR

(43) Date of publication of application: 03.01.2018
(73) Proprietor: VSL International AG, 3014 Bern (CH)
(72) Inventor: ALMEIDA, Romao, 1000-304 LISBOA (PT); HAUK, Thorsten, 3097 Liebefeld (CH); BALLESTER MUÑOZ, Francisco, 39005 Santander (ES); RICO ARENAL, Jokin, 39005 Santander (ES)
(74) Representative: BOVARD AG

(56) References cited:
- WO-A1-2015/003733
- DE-A1-102013 211 751
- DE-A1-102014 215 969

## Description

### Object of the invention.

The object of the present invention is a method for mounting a wind turbine on a tower having characteristics aimed at minimizing efforts transmitted to the tower while the generator is being mounted so that said tower supports actions or vertical loads only.

### Background.

The international patent application WO 2015/003733 (VSL INTERNATIONAL AG) should be noted in this section, which claims a system for lifting loads for mounting a wind turbine on a tower and including embodiments relating to the lifting of the nacelle and the rotor with the blades of the wind turbine.

This patent claims a method for moving a load element from a base region of a construction, in particular a tower of a tower turbine, to another region of the construction, comprising the following steps:
- providing an anchoring assembly at the top region of the construction;
- assembling a platform element for supporting the load element at the base region of the construction and placing the platform element with the lifting cables;
- providing the load element to be lifted at the base region of the construction;
- loading the load element on the platform element and lifting the platform element with the load element to the load lifting position at another region of the construction, or lifting the platform element without the load element and loading the load element on the platform element after the platform element has reached the load lifting position at said other region of the construction;
- moving the load element by means of a shifting element on the platform element;
- loading the load element on its position on the construction; and
- lowering the platform element to the base region of the construction.

In this invention balancing of the structure during movement of the nacelle and the rotor is carried out by a displaceable counterweight, which complicates balancing control.

Japanese Patent JP2006-207502, also uses a counterweight system for balancing the centre of gravity of the tower, by displacing the counterweight in the displacement of the nacelle and balancing of the tower.

Patent US2014/0212288A1 utilizes balancing means comprising liquid tanks.

The methods described in the above patents require hydraulic systems arranged in the support structure itself, for its horizontal stabilization against forces from the wind or from imbalance of loads supported by said structure.

On the other hand, it should be noted that although some documents disclosing alternative solutions are known in the art, the applicant is unaware of the existence of prior art having technical, structural and constitutive features similar to those presented herein.

### Summary of the invention

The method for mounting a wind turbine on a tower, object of this invention, has features that provide different advantages over the above mentioned background, the most significant being:
- Loads transmitted to the tower are minimized so that it only supports actions or vertical loads.
- The platform is anchored to the ground from a single side of the tower by means of cables, with no counterweights in the support structure itself being required, making it more stable and safe. These same anchors minimize the need for providing hydraulic jacks or additional horizontal stabilization systems in the support structure itself.
- In the present invention, the support structure is horizontally stabilized against winds or imbalance of loads by the ground or foundation anchors themselves, a single jack or hydraulic system being required in the lifting structure, over the four hydraulic jacks required in known systems; the fewer additional systems are required by the support structure, the simpler is the process.
- It allows the structure to be anchored to the tower foundation such that no counterweights are required on the lower part.
- The force of the hydraulic jacks as a counterweight is minimized by the movements of the gantries and, in addition, anchoring on one side of the tower is allowed.

This method comprises providing a support frame for mounting of reduced capacity, auxiliary lifting equipment and which can be removed together with the wind turbine itself, eliminating the need for auxiliary cranes.

Hanging of the whole assembly (frame and platform) is carried out at points of the tower arranged on opposite sides thereof; preventing the tower from undergoing bending moments.

According to the invention, this method comprises mounting a frame in an region close the upper end of the tower, supported on support points defined in two opposite sides of the tower, and working platforms; mounting of winches on said frame being carried out for lifting from the ground of a support structure of the nacelle and the rotor with the blades of the wind turbine to be installed.

For this purpose, this method comprises providing a support structure, which has two longitudinal beams allowing said structure to be lightened as well as the support of the frame to be reduced to two points on opposite sides of the tower.

Said structure comprises two gantries capable of moving on the longitudinal beams, the method of the invention providing for arranging the support structure around the base of the tower, with the longitudinal beams arranged in two opposite sides of the tower, specifically on the same sides on which the support frame is mounted; and such that the movable gantries of the structure protrude from the other opposite sides of the tower.

The method of the invention provides for mounting of the nacelle of the wind turbine in a first gantry of the support structure and mounting of the rotor in horizontal position, on the end of the support structure corresponding to the second gantry of the structure, such that two of the blades are arranged, whether they are supported or not, on the longitudinal beams of the support structure, and the third rotor blade facing opposite the direction of the tower. Subsequently, during lifting of the platform, turning the rotor will be carried out from a horizontal position to an upright position.

In case of space limitations for mounting the blades, said elements can be installed at a height where limitations are no longer present by means of a removable support beam which will keep the rotor in a horizontal position during the installation process of the blade and which will be subsequently withdrawn to enable the turning of the rotor from the horizontal to the working vertical position.

Stabilized lifting of the support structure, carrying the nacelle and the rotor with the corresponding blades, to the upper end of the tower is performed by means of the winches previously installed on the upper frame; stabilization of said structure being carried out while it is lifted by means of cables attached to ground anchor jacks on a lateral side of the tower and to the ends of the support structure, where the nacelle and the rotor with the blades of the wind turbine are positioned.

The use of cables and jacks for balancing of the structure significantly simplifies this operation and ensures a vertical load transmission to the tower, avoiding the transmission of bending stresses thereto.

As already mentioned, while the structure is being lifted or when said structure has reached a certain height, rotation of the rotor with the blades is performed from a horizontal to a vertical position, with the aid of cranes and keeping said rotor, with the blades, suspended from the corresponding gantry of the structure.

Once the structure carrying the nacelle and the rotor with the blades has been lifted by means of winches, positioning and anchoring of said support structure on the frame is carried out, stabilizing it with the aid of cables attached to the ground anchor jacks.

Once the support structure has been anchored and stabilized on the frame, displacement of the first gantry carrying the nacelle is carried out on the longitudinal guides of the structure in the direction of the upper end of the tower, to a mounting position of the nacelle on the upper end of the tower, the mounting of the nacelle on the tower being thus carried out.

Next, the first gantry is returned to the original position and the displacement of the support structure of the second gantry, carrying the rotor and the blades, is carried out on the longitudinal guides in the direction of the upper end of the tower to a mounting position of the rotor with the blades in the nacelle; returning the second gantry to the initial position once the mounting of the rotor in the nacelle has been performed.

Once the mounting of the wind turbine assembly has been completed, controlled lowering of the support structure and removal of the winches are performed from the working platforms and the frame.

### Description of the figures

In order to complement the description that is being made and with the purpose of facilitating the understanding of the characteristics of the invention, a set of drawings is accompanied herein which, for illustrative and non-limiting purposes, the following has been depicted:

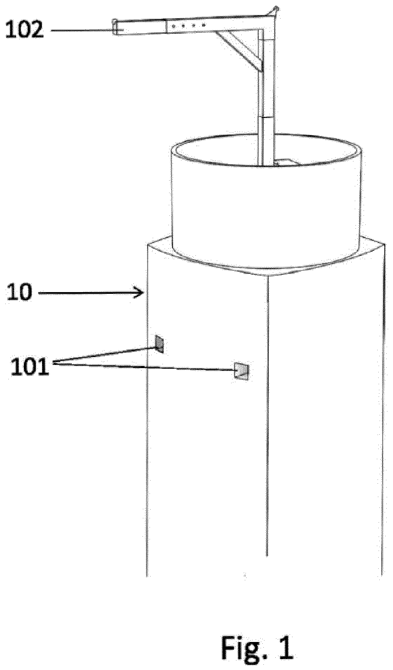

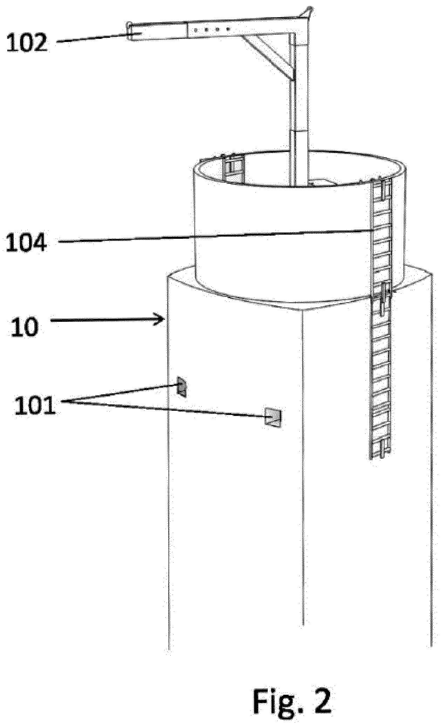

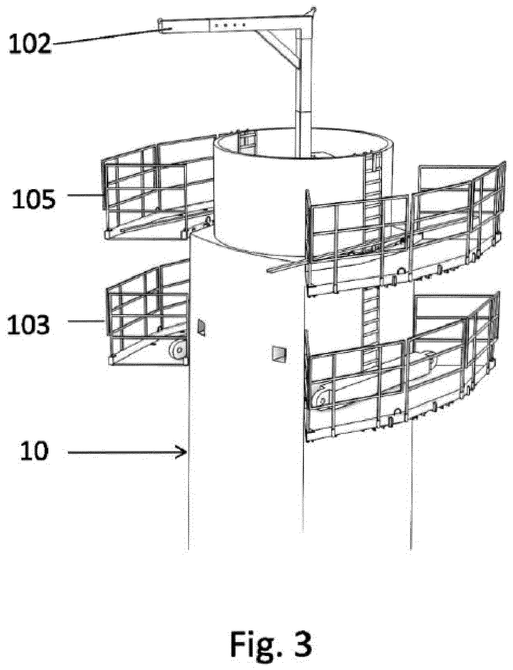

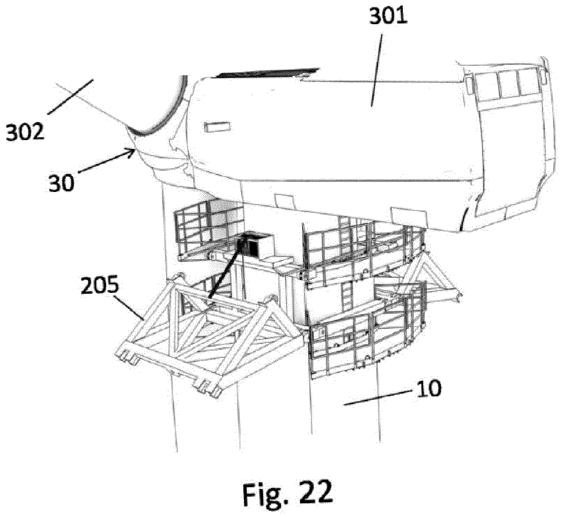

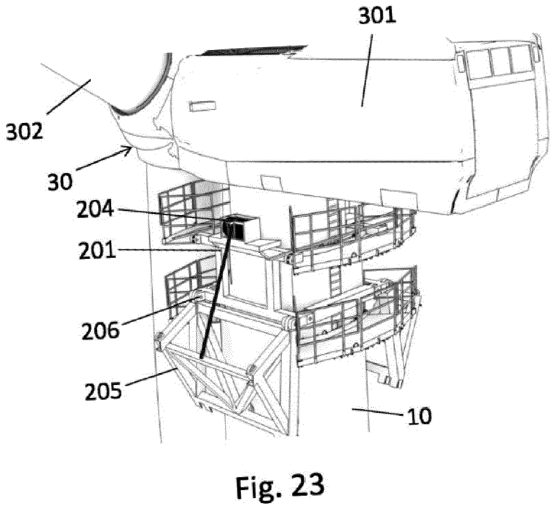

- Figures 1 to 31 show successive mounting steps of a wind turbine on a tower according to the mounting method of the invention.

### Preferred embodiment of the invention

The upper end of a tower (10) can be seen in figure 1 having support points (101) in two opposite sides thereof for mounting a frame, the mounting process starting with the installation of a hoist.

In figure 2, installation of access ladders (104) and other safety members such as life lines in the tower (10) is carried out.

In figure 3, the upper and lower auxiliary platforms (103 and 105) are installed which in turn safely carry some of the elements required for mounting a support frame (20). Specifically, bracing struts (203) are provided in the upper platform (105) to attach the rectangular elements (201) by the upper thereof end, whereas frame bracing beams (202) are provided in the lower platform.

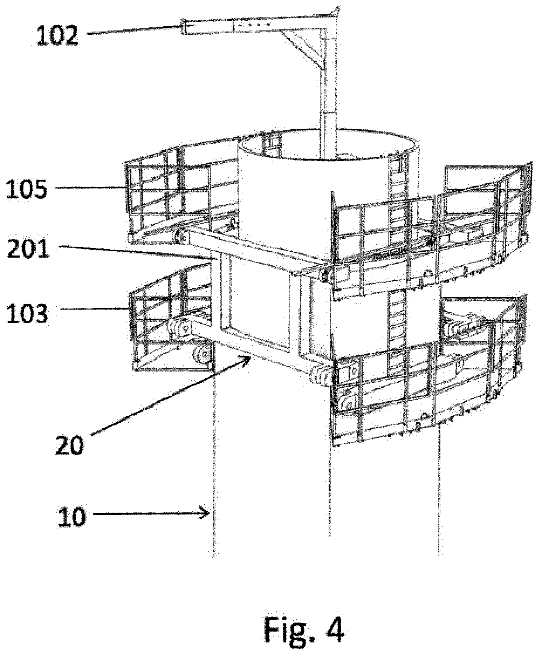

Mounting of a support frame (20) on the support points (101) of the tower (10) as described below are shown in figures 4 to 10.

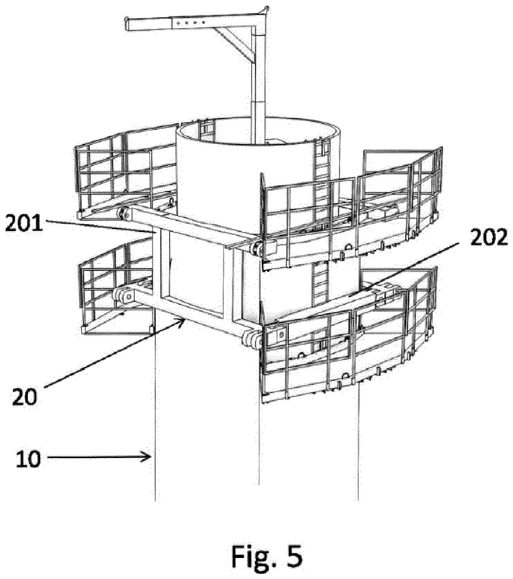

As shown in figure 4, rectangular elements (201) of the support frame (20) are positioned on the support points (101) and consequently in opposite sides of the tower (10), said rectangular elements being attached to each other by the lower ends thereof by means of bracing beams (202) as shown in figure 5.

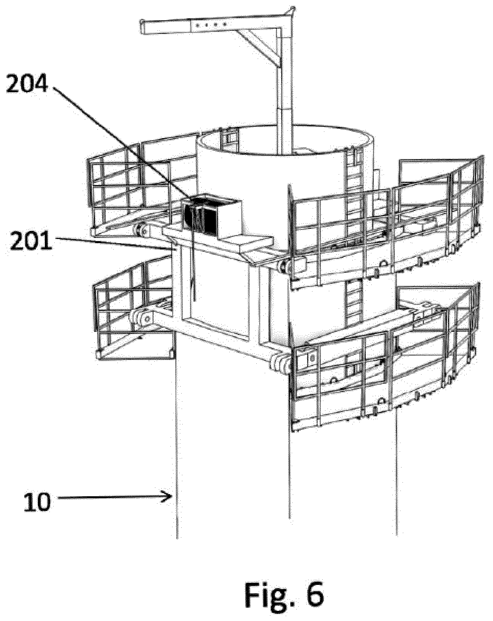

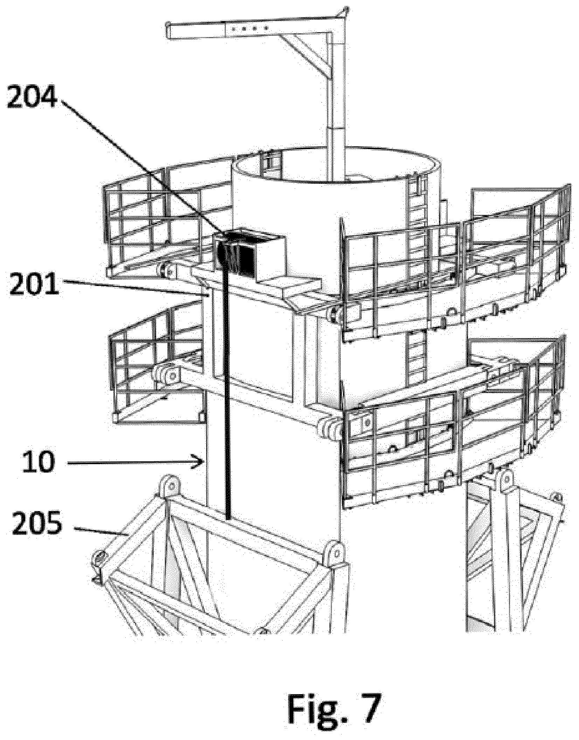

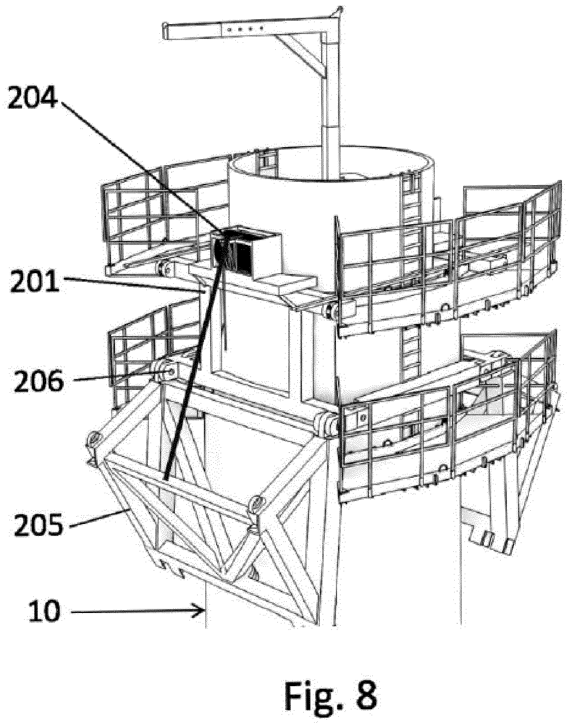

Next (figure 6), two separate winches (204) are installed on each of the rectangular elements (201) of the support frame, hoisting of brackets (205), which are attached to the lower part of the rectangular elements (201) by means of bolts (206) as shown in figure 8, being then performed (figure 7) by means of the winches (204).

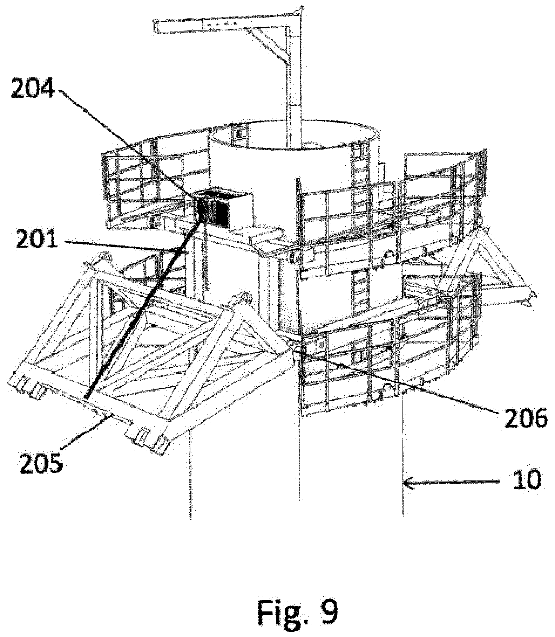

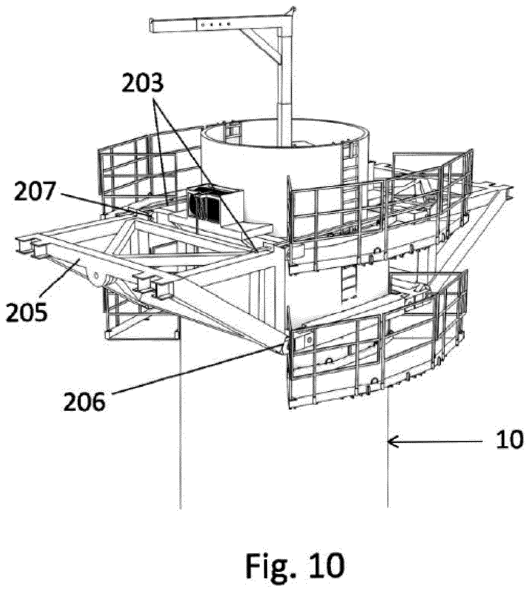

Next (figures 9 and 10), rotation of the brackets (205) on the preassembled bolts (206) is started and said brackets (205) are attached by the upper end thereof to the respective rectangular elements (201) by means of upper bolts (207); transverse bracing struts (203), previously hoisted with the auxiliary upper platform (105), being also installed.

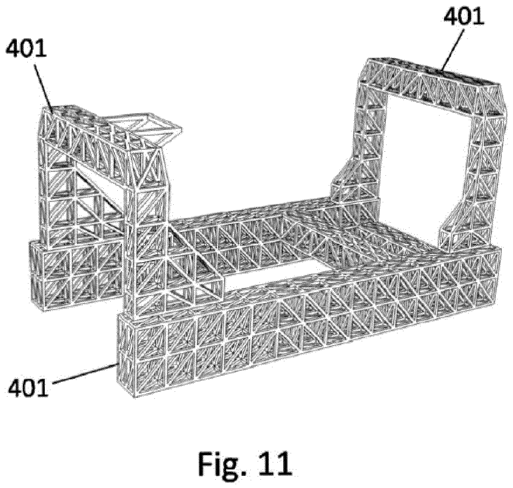

For lifting and installation of a wind turbine on the tower (10) the method of the invention includes the provision of a support structure (40) as depicted in figure 11 and comprising longitudinal, parallel and braced beams (401), on which a first gantry (402) and a second gantry (403) capable of longitudinal displacement are mounted.

Initially, this support structure is placed around the base of the tower so that the longitudinal beams (401) are arranged on two opposite sides of the tower (10), the displaceable gantries (402, 403) protruding from the other two opposite sides of the tower.

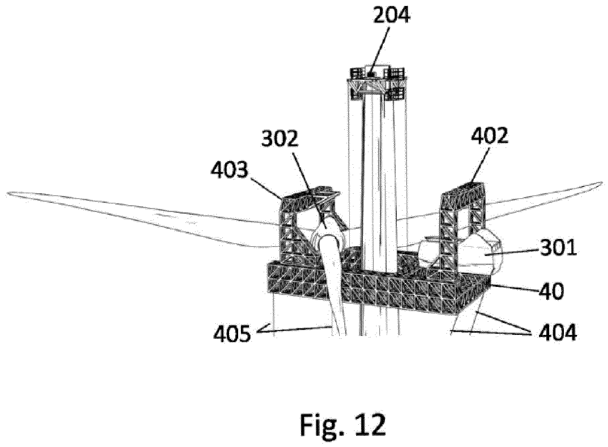

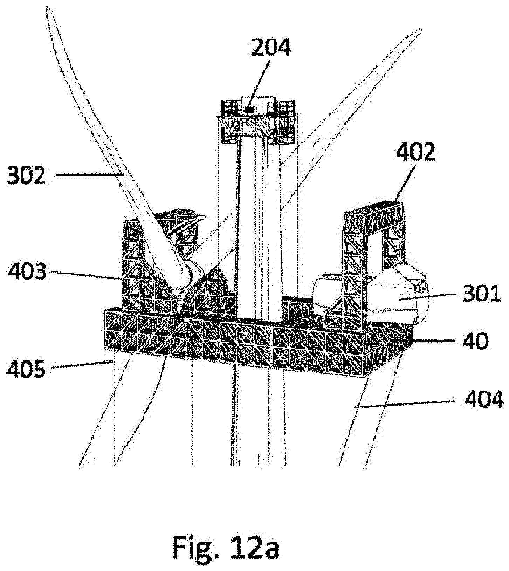

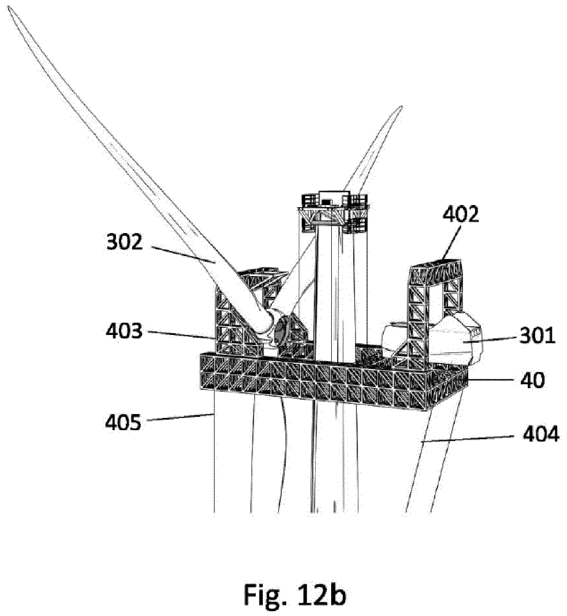

As shown in figure 12, the nacelle (301) of a wind turbine (309) is arranged on the end of the support structure (40) corresponding to the first gantry (402) and the rotor with the blades (302) is arranged horizontally on the other end of the support structure corresponding to the second gantry (403).

As shown in figures 12, 12a and 12b the support structure (40) carrying the nacelle (301) and rotor with the blades (302) is hoisted along the tower by means of the winches (204).

The rotor with the blades (302) is initially positioned on the support structure (40) in a horizontal position and it is rotated to a vertical position while the support structure (40) is being lifted.

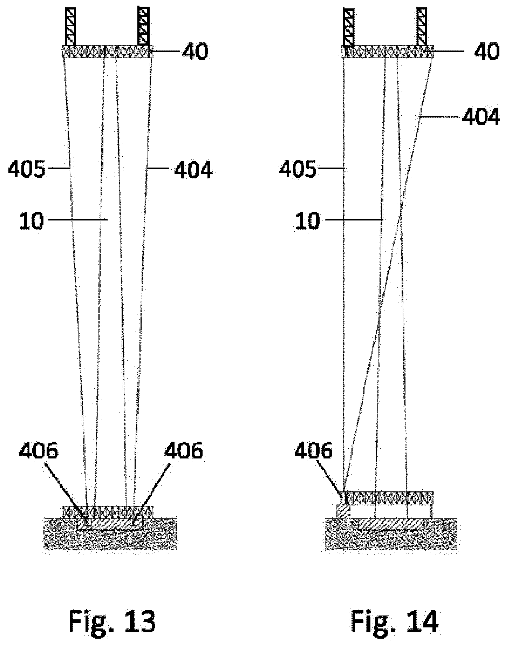

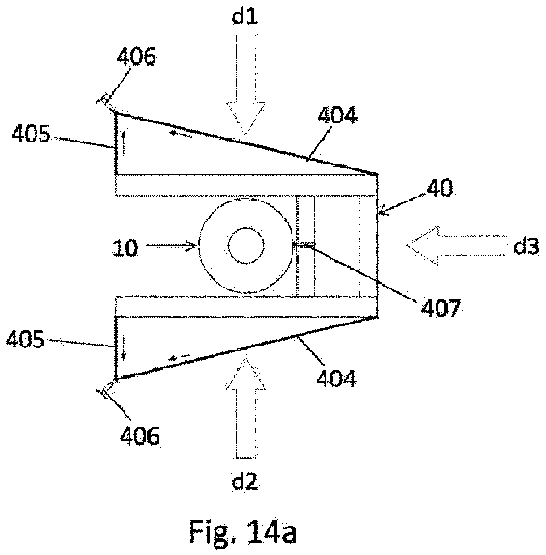

As diagrammatically shown in figures 13 and 14, while the support structure (40) is being hoisted, it is stabilized by cables (404, 405) attached to ground anchor jacks (406); said cables (404) being attached to the end of the support structure (40) provided with the first gantry and the cables (405) to the opposite end provided with the second gantry.

In figure 13, the jacks (406) for driving the cables (404, 405) are arranged on opposite sides of the tower (10) while in figure 14 they are arranged on the same side of the tower (10).

In figure 14a, which corresponds to a top view of figure 14, the support structure (40) can be seen horizontally stabilized against forces caused by winds or imbalance of loads, coming from three of the four possible directions. Horizontal stabilization of the support structure in two opposite lateral directions (d1, d2) is achieved by means of the cables (404, 405) attached to the hydraulic jacks (406) which are anchored to the ground or to the foundations at the same side of the tower (10); and the stabilization of the support structure (40) in a third direction (d3), perpendicular to the directions (d1, d2), by means of a single hydraulic jack (407) mounted on the support structure (40) stabilizing said support structure (40).

During the elevation process the working jacks (406) are those acting on the cables (405) attached to the end of the support structure carrying the rotor with the blades (302).

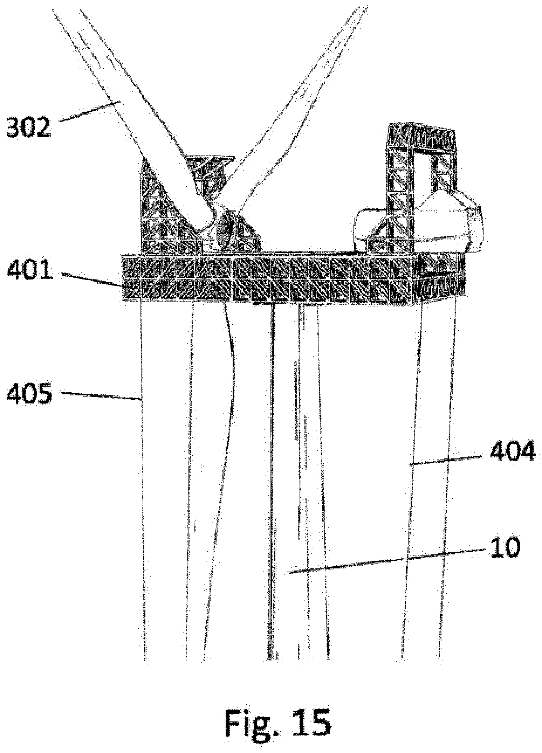

Once the upper position represented for example in figure 15 has been reached by the support structure, the longitudinal beams (401) rest on the brackets (205) of the support frame (20), said brackets (205) facing perpendicularly to said longitudinal beams (401) of the support structure.

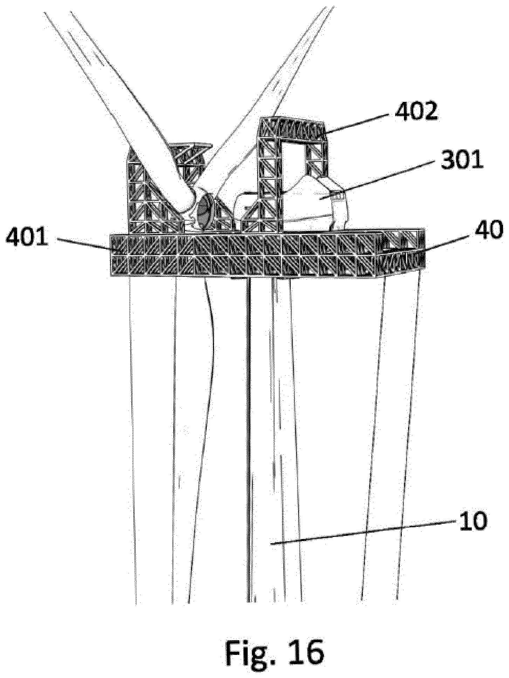

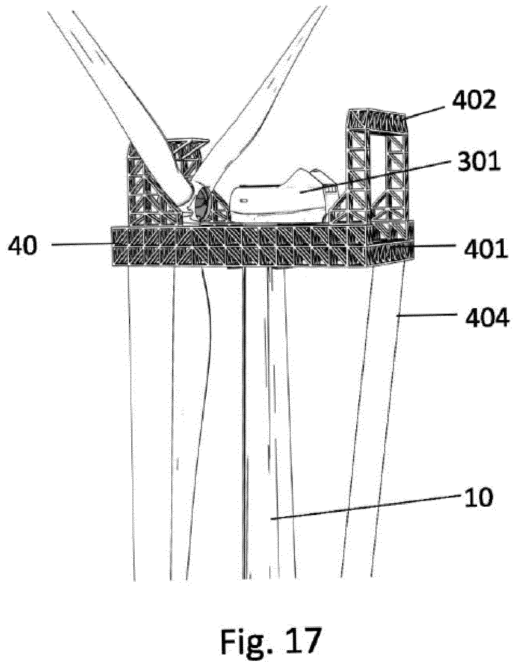

In this position and as shown in figure 16, the first gantry (402) carrying the nacelle (301) of the wind turbine is displaced on the longitudinal beams (401) of the support structure (40) to a mounting position of the nacelle on the upper end of the tower (10). Once the nacelle has been mounted on the tower (figure 17) the first gantry (402) is displaced on the longitudinal beams (401) back to its original position.

During said movements the jacks (406) work on the cables (404) attached to the end of the support structure corresponding to the first gantry (402) stabilizing the support structure (40) such that the weight of the loads is transmitted almost vertically to the tower (10).

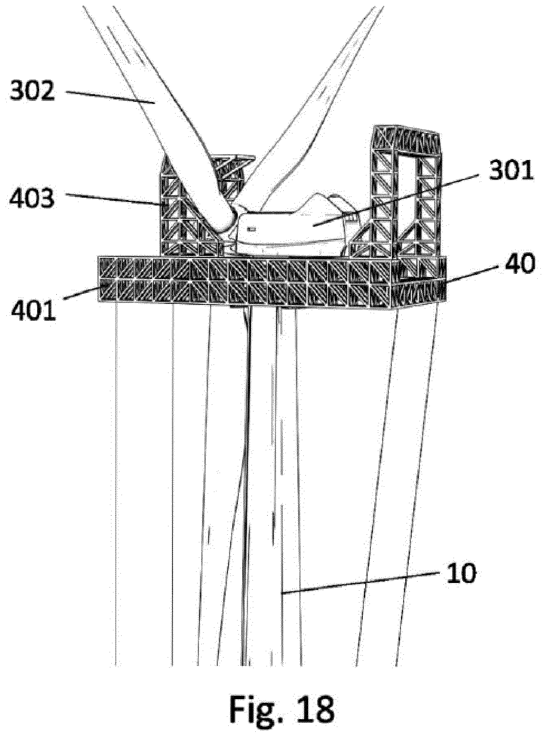

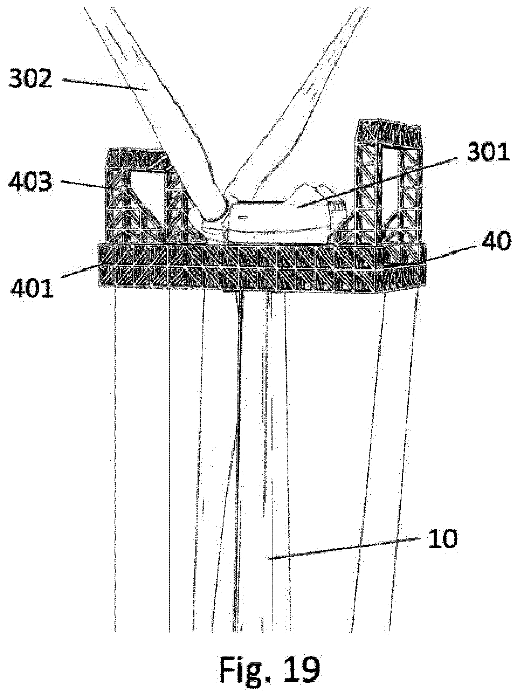

Subsequently, and as shown in figures 18 and 19, the second gantry (403) carrying the rotor with the blades (302) is displaced along the longitudinal beams (401) to a mounting position of the rotor with the blades (302) in the nacelle (301). The second gantry (403) is then returned to the initial position.

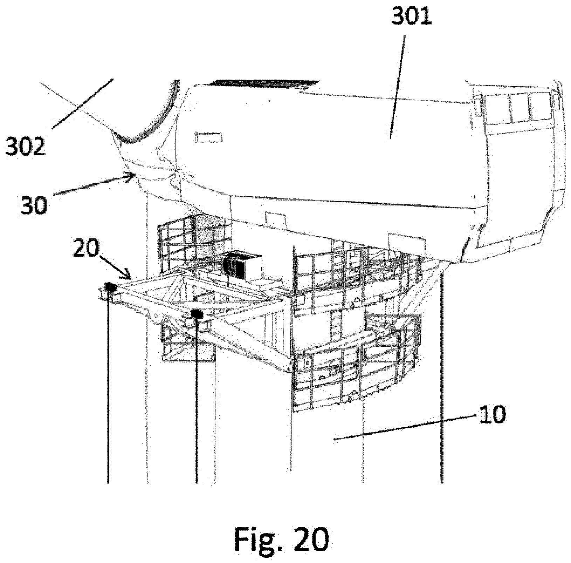

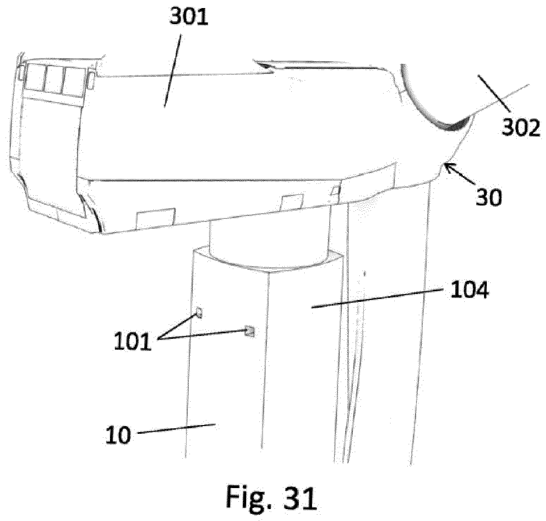

Once these coupling operations of the nacelle (301) and the rotor with the blades (302) have been performed, the wind turbine (30) is mounted on the tower (10) as shown in figure 19; subsequently disassembling the support structure (40) and then, the support frame (20) in reverse mounting order, as shown in figures 20 to 30, until only the wind turbine (30) is mounted on the tower (10) as shown in figure 31.

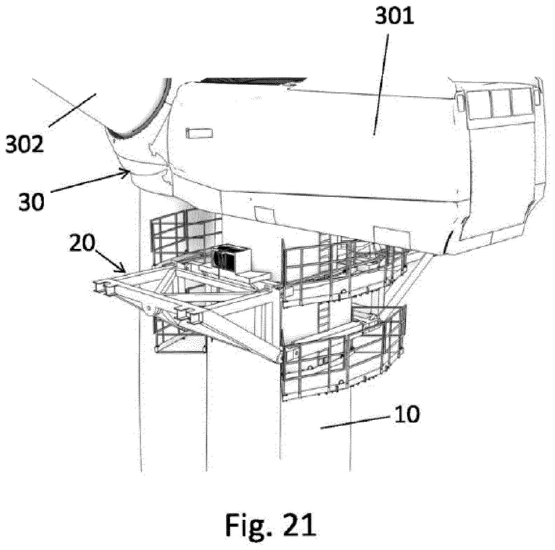

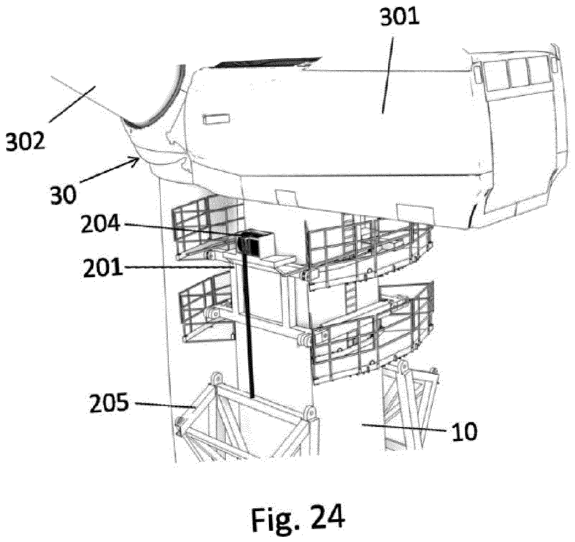

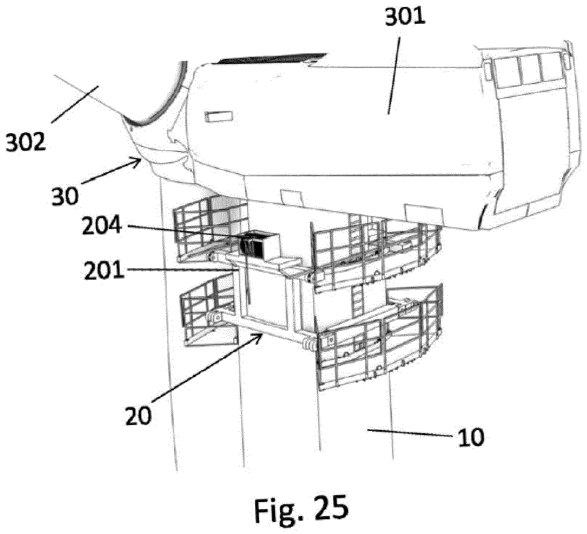

Specifically in figure 20 lowering of the support structure (40) is being performed by means of the winches (204). Then (figures 21 to 23) the bracing struts (203) and the upper and lower bolts (207, 206) are removed for disassembling the brackets (205) and removing them by means of the winches, as shown in figures 24 and 25.

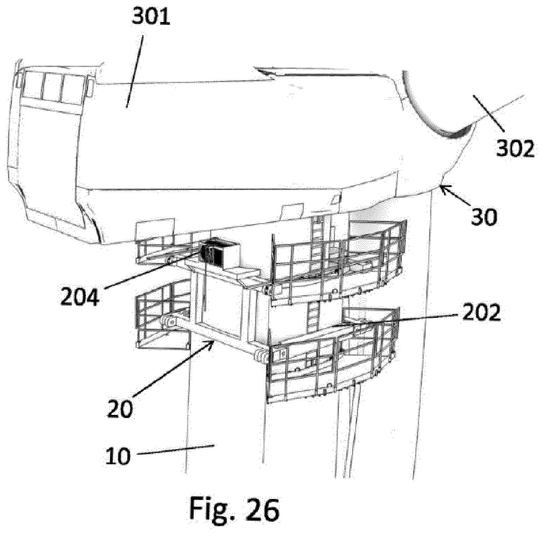

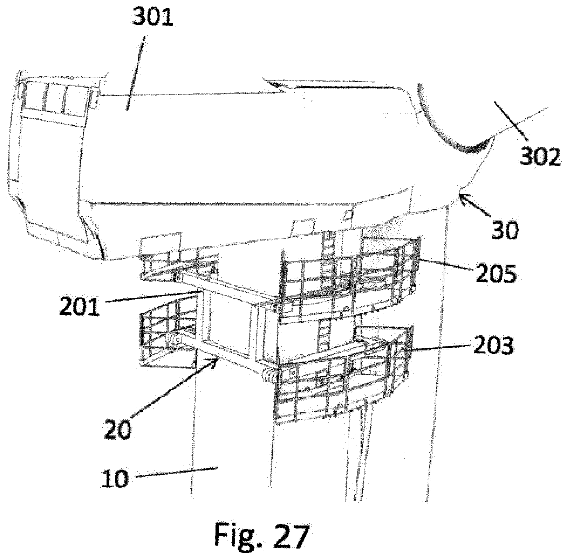

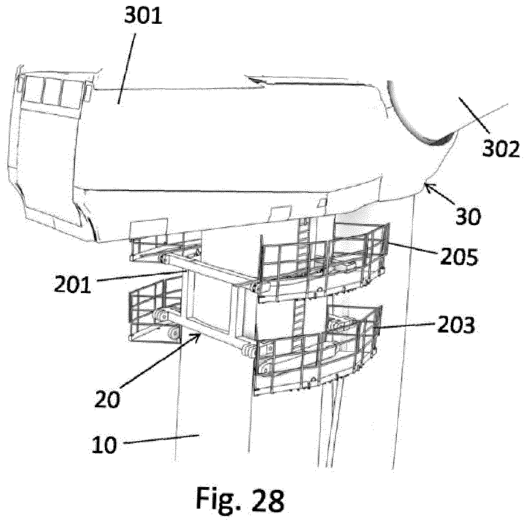

Then the winches (figures 26 and 27) are removed, the struts (203) and the bracing beams (202) are removed and they are positioned in their respective platforms (figures 28).

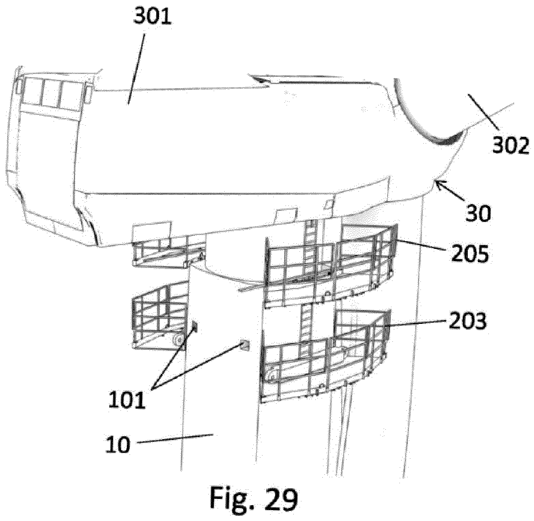

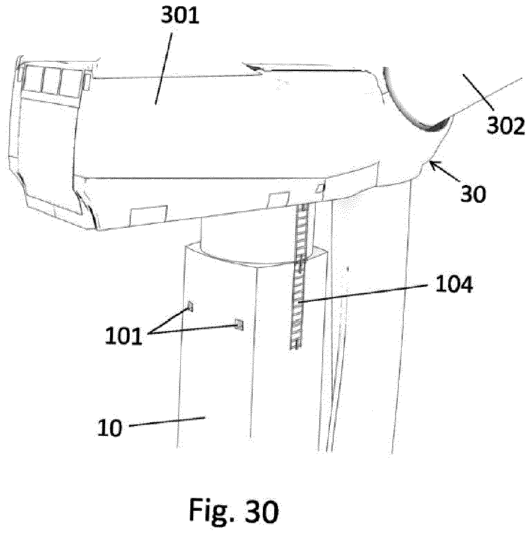

In figure 29, the rectangular elements (201) are disassembled from the frame, followed by removal of the auxiliary platforms (103 and 105) and of the access ladders (104), as shown in figure 30 and 31, thus concluding disassembly of the support structure (40) and the frame (20).

Once having been sufficiently described the nature of the invention, as well as one example of a preferred embodiment, it should be noted to all appropriate effects that materials, shape, size and arrangement of the elements described herein can be modified provided that this does not involve a change in the essential features of the invention which are claimed below.

## Claims

1. Method for mounting a wind turbine on a tower; the method comprises:
a) defining support points (101) in a region close to an upper end of the tower (10), and in two opposite sides thereof, and mounting a support frame (20) on said support points (101);
b) mounting on the support frame (20) winches (204) arranged on two opposite sides of the tower (10);
c) providing a support structure (40), comprising two longitudinal, parallel and braced beams (401), on which a first gantry (402) and a second gantry (403) capable of longitudinal displacement are mounted; and placing the support structure around the base of the tower, with the longitudinal beams (401) arranged on two opposite sides of the tower, the gantries (402, 403) projecting from other two opposite sides of the tower;
d) arranging the nacelle (301) on the end of the support structure (40) corresponding to the first gantry (402) and arranging the rotor with the blades (302) horizontally on the other end of the support structure corresponding to the second gantry (403);
e) lifting in a stabilized manner the support structure (40) carrying the nacelle (301) and rotor with the blades (302), by means of the winches (204), to the upper end of the tower; and the horizontal stabilization of said support structure (40) by cables (404, 405) attached to ground anchor jacks (406) and to the ends of the support structure (40) provided with the first gantry (402) and the second gantry (403);
f) rotating the rotor with the blades (302) from a horizontal position to a vertical position while the support structure (40) is being lifted;
g) positioning and anchoring the support structure (40) on the support frame (20) by means of the longitudinal beams (401);
h) displacing (401) the first gantry (402) carrying the nacelle (301) on the longitudinal guides of the support structure (40) to a mounting position of the nacelle (301) on the upper end of the tower; mounting the nacelle (301) on the tower, and displacing the first gantry (402) on the longitudinal beams (401) returning back to its original position; stabilizing the support structure (40) during these movements by actuation of the jacks (406) on the cables (404) attached to the ends of the support structure corresponding to the first gantry (402); such that the weight of the loads is transmitted almost vertically to the tower (10);
i) displacing the second gantry (403) carrying the rotor with the blades (302) on the longitudinal guides (401) to a mounting position in the nacelle (301); the second gantry (403) returning back to the initial position once the rotor with the blades has been mounted in the nacelle (301) and stabilizing the support structure (40) during these movements by actuation of the jacks (406) on the cables (405) attached to the end of the structure (40) corresponding to the second gantry (403);
j) lowering the structure (40) and disassembling the winches (204) and the frame (20).

2. Method according to claim 1, **characterized in that** mounting of the frame comprises: positioning rectangular elements (201) of the support frame (20) on the support points (101) and on opposite sides of the tower (10); attaching said rectangular elements to each other by the lower ends thereof by bracing beams (202) and by the upper ends thereof by transverse bracing struts (203); hoisting, by means of winches (204), of brackets (205) that are attached to the bottom of the rectangular elements (201) by means of bolts (206), rotating of the brackets (205) on the bolts (206) and fixing of said brackets (205) by the upper end thereof to the respective rectangular elements (201) by means of upper bolts (207).

3. Method according to claim 1, **characterized in that** it comprises the horizontal stabilization of the support structure (40) in two opposite lateral directions (d1, d2), by providing the jacks (406) for driving the cables (404, 405) to a same side of the tower (10).

4. Method according to claim 3, **characterized in that** it comprises the horizontal stabilization of the support structure (40) in a horizontal direction (D3) perpendicular to the directions (d1, d2) by a hydraulic jack (407) mounted on the support structure (40) itself.

5. Method according to claim 1, **characterized in that** it comprises the horizontal stabilization of the support structure (40) by providing the jacks (406) for driving the cables (404, 405) on opposite sides of the tower (10)

## Patentansprüche

1. Verfahren zur Montage einer Windturbine auf einem Turm, wobei das Verfahren umfasst:
a) Definieren von Haltepunkten (101) in einem Bereich nahe an einem oberen Ende und an zwei gegenüberliegenden Seiten des Turms (10) und Montieren eines Traggerüsts (20) an den Haltepunkten (101);
b) Montieren von Winden (204) an dem Traggerüst (20), angeordnet an zwei gegenüberliegenden Seiten des Turms (10);
c) Bereitstellen einer Tragstruktur (40), welche zwei longitudinale, parallele und stützende Träger (401) umfasst, an welchen ein erstes Gerüst (402) und ein zweites Gerüst (403) montiert sind, welche longitudinal verlagerbar sind; und Anordnen der Tragstruktur mit den longitudinalen Trägern (401) um die Basis des Turms, welche an zwei gegenüberliegenden Seiten des Turms angeordnet sind, wobei die Gerüste (402, 403) von anderen zwei gegenüberliegenden Seiten des Turms hervorragen;
d) Anordnen des Maschinenhauses (301) an dem Ende der Tragstruktur (40), korrespondierend zu dem ersten Gerüst (402), und horizontales Anordnen des Rotors mit den Flügeln (302) an dem anderen Ende der Tragstruktur, korrespondierend zu dem zweiten Gerüst (403);
e) Anheben der Tragstruktur (40) in einer stabilisierenden Weise, welche das Maschinenhaus (301) und Rotor mit den Flügeln (302) trägt, mittels der Winden (204) zu dem oberen Ende des Turms; und wobei die horizontale Stabilisierung der Tragstruktur (40) durch Kabel (404, 405) erfolgt, die an Bodenankerhebern (406) und an den Enden der Tragstruktur (40) befestigt sind, an welchem das erste Gerüst (402) und das zweite Gerüst (403) angeordnet sind;
f) Drehen des Rotors mit den Flügeln (302) aus einer horizontalen Position in eine vertikale Position, während die Tragstruktur (40) angehoben wird;
g) Positionieren und Verankern der Tragstruktur (40) an dem Traggerüst (20) mittels der longitudinalen Träger (401);
h) Verschieben (401) des ersten Gerüsts (402), welches das Maschinenhaus (301) trägt, an den longitudinalen Führungen der Tragstruktur (40) in eine Montageposition des Maschinenhauses (301) an dem oberen Ende des Turms; Befestigen des Maschinenhauses (301) an dem Turm und Verschieben des ersten Gerüsts (402) an den longitudinalen Trägern (401) zurück in seine ursprüngliche Position; Stabilisieren der Tragstruktur (40) während dieser Bewegungen durch Betätigen der Heber (406) an den Kabeln (404), welche an den Enden der Tragstruktur, korrespondierend zu dem ersten Gerüst (402), befestigt sind; so dass das Gewicht der Lasten im Wesentlichen vertikal auf den Turm (10) übertragen werden;
i) Verschieben des zweiten Gerüsts (403), welches den Rotor mit den Flügeln (302) trägt, an den longitudinalen Führungen (401) in eine Montageposition an dem Maschinenhaus (301); wobei das zweite Gerüst (403) in die Ausgangsposition zurückkehrt, wenn der Rotor mit den Flügeln an dem Maschinenhaus (301) befestigt worden ist und Stabilisieren der Tragstruktur (40) während der Bewegungen durch Betätigen der Heber (406) an den Kabeln (405), welche an dem Ende der Struktur (40), korrespondierend zu dem zweiten Gerüst (403), befestigt sind;
j) Absenken der Struktur (40) und Abbauen der Winden (204) und des Gerüsts (20).

2. Verfahren nach Anspruch 1, **dadurch gekennzeichnet, dass** die Montage des Gerüsts umfasst: Positionieren von rechteckigen Elementen (201) an dem Traggerüst (20) an den Haltepunkten (101) und an gegenüberliegenden Seiten des Turms (10); Befestigen der rechteckigen Elemente an ihren unteren Enden aneinander durch stützende Träger (202) und an ihren oberen Enden durch Querstützstreben (203); Anheben mittels Winden (204) von Halterungen (205), welche an dem Boden der rechteckigen Elemente (201) mittels Bolzen (206) befestigt sind, Drehen der Halterungen (205) an den Bolzen (206) und Fixieren der Halterungen (205) an ihren oberen Enden an den entsprechenden rechteckigen Elementen (201) mittels oberer Bolzen (207).

3. Verfahren nach Anspruch 1, **dadurch gekennzeichnet, dass** es die horizontale Stabilisierung der Tragstruktur (40) in zwei gegenüberliegenden lateralen Richtungen (d1, d2) dadurch umfasst, dass die Heber (406), um die Kabel (405, 406) zu betätigen, auf der gleichen Seite des Turms (10) vorgesehen sind.

4. Verfahren nach Anspruch 3, **dadurch gekennzeichnet, dass** es die horizontale Stabilisierung der Tragstruktur (40) in einer horizontalen Richtung (D3) senkrecht zu den Richtungen (d1, d2) dadurch umfasst, dass ein hydraulischer Heber (407) an der Tragstruktur (40) selbst montiert ist.

5. Verfahren nach Anspruch 1, **dadurch gekennzeichnet, dass** es die horizontale Stabilisierung der Tragstruktur (40) dadurch umfasst, dass die Heber (406), um die Kabel (404, 405) zu betätigen, an gegenüberliegenden Seiten des Turms (10) vorgesehen sind.

## Revendications

1. Procédé de montage d'une éolienne sur une tour; le procédé comprenant:
a) la définition de points de support (101) dans une zone proche d'une extrémité supérieure de la tour (10), et, au niveau de deux côtés opposés de celle-ci, le montage d'un cadre de support (20) sur lesdits points de support (101);
b) le montage, sur le cadre de support (20), de treuils (204) agencés sur deux côtés opposés de la tour (10);
c) la fourniture d'une structure de support (40), comprenant deux poutres longitudinales (401), parallèles et haubanées, sur lesquelles sont montés un premier portique (402) et un deuxième portique (403) capables de se déplacer de manière longitudinale; et le placement de la structure de support autour de la base de la tour, les poutres longitudinales (401) étant agencées sur deux côtés opposés de la tour, et les portiques (402,403) faisant saillie au niveau de deux autres côtés opposés de la tour;
d) l'agencement de la nacelle (301) au niveau de l'extrémité de la structure de support (40) correspondant au premier portique (402), et l'agencement du rotor avec les pales (302) horizontalement sur l'autre extrémité de la structure de support correspondant au deuxième portique (403);
e) le soulèvement, de manière stable, de la structure de support (40) portant la nacelle (301) et le rotor avec les pales (302), au moyen des treuils (204), vers l'extrémité supérieure de la tour; et la stabilisation horizontale de ladite structure de support par des câbles (404, 405) fixés aux vérins d'ancrage au sol (406) et aux extrémités de la structure de support (40) équipée avec le premier portique (402) et le deuxième portique (403);
f) le pivotement du rotor avec les pales (302) depuis une position horizontale vers une position verticale pendant que la structure de support (40) est soulevée;
g) le positionnement et l'ancrage de la structure de support (40) sur le cadre de support (20) au moyen des poutres longitudinales (401);
h) le déplacement (401) du premier portique (402) portant la nacelle (301) sur les guides longitudinaux de la structure de support (40) vers une position de montage de la nacelle (301) sur l'extrémité supérieure de la tour; le montage de la nacelle (301) sur la tour, et le déplacement du premier portique (402) sur les poutres longitudinales (401) pour revenir à sa position originale; la stabilisation de la structure de support (40) pendant ces mouvements en actionnant les vérins (406) sur les câbles (404) fixés aux extrémités de la structure de support correspondant au premier portique (402), de telle sorte que le poids des charges est transmis presque verticalement à la tour (10);
i) le déplacement du deuxième portique (403) portant le rotor avec les pales (302) sur les guides longitudinaux (401) vers une position de montage dans la nacelle (301); le deuxième portique (403) revenant dans sa position initiale une fois que le rotor avec les pales a été monté dans la nacelle (301), et la stabilisation des vérins (406) sur les câbles (405) fixés à l'extrémité de la structure (40) correspondant au deuxième portique (403);
j) l'abaissement de la structure (40) et le démontage des treuils (204) et du cadre (20).

2. Procédé selon la revendication 1, **caractérisé en ce que** le montage du cadre comprend: le positionnement d'éléments rectangulaires du cadre de support (20) sur les points de support (101) et de deux côtés opposés de la tour (10); la fixation desdits éléments rectangulaires les uns aux autres par leurs extrémités inférieures par des poutres de renfort (202) et par leurs extrémités supérieures par des entretoises de renfort transversales (203); le hissage, au moyen de treuils (204), d'équerres (205) qui sont fixées au bas des éléments rectangulaires à l'aide de boulons (206), le pivotement des équerres (205) sur les boulons (206), et la fixation des équerres (205) par leur extrémité supérieure aux éléments rectangulaires respectifs (201) à l'aide de boulons supérieurs (207).

3. Procédé selon la revendication 1, **caractérisé en ce qu'**il comprend la stabilisation horizontale de la structure de support (40) dans deux directions horizontales (d1, d2) en agençant les vérins (406) pour entraîner les câbles (404, 405) d'un même côté de la tour (10).

4. Procédé selon la revendication 3, **caractérisé en ce qu'**il comprend la stabilisation horizontale de la structure de support (40) dans une direction horizontale (D3) perpendiculaire aux directions (d1, d2) par un vérin hydraulique (407) monté sur la structure de support (40) elle-même.

5. Procédé selon la revendication 1, **caractérisé en ce qu'**il comprend la stabilisation horizontale de la structure de support (40) en agençant les vérins (406) pour entraîner les câbles (404, 405) sur des côtés opposés de la tour (10).
